# EUROPEAN PATENT SPECIFICATION

(11) **EP 3 116 187 B1**
(45) Date of publication and mention of the grant of the patent: **04.12.2019**
(21) Application number: 15176095.6
(22) Date of filing: 09.07.2015
(51) Int. Cl.: H04L 29/06, H04L 9/08

(54) **METHODS FOR FACILITATING SECURE COMMUNICATION**
VERFAHREN ZUR ERMÖGLICHUNG SICHERER KOMMUNIKATION
PROCÉDÉS DESTINÉS À FACILITER LES COMMUNICATIONS SÉCURISÉES

(43) Date of publication of application: 11.01.2017
(73) Proprietor: NXP B.V., 5656 AG Eindhoven (NL)
(72) Inventor: Polak, Piotr, 5656 AG Eindhoven (NL); Geerlings, Jurgen, 5656 AG Eindhoven (NL); Al-Kadi, Ghiath, 5656 AG Eindhoven (NL)
(74) Representative: Krott, Michel

(56) References cited:
- US-A1- 2007 076 886
- US-A1- 2007 174 901
- US-A1- 2008 292 103

## Description

### FIELD

The present disclosure relates to methods for facilitating secure communication in a network. Furthermore, the present disclosure relates to corresponding computer program products, to a corresponding source node and to a corresponding destination node.

### BACKGROUND

Today, electronic devices are often networkable devices. That is to say, such devices may often be incorporated into wired networks, such as Ethernet, or into wireless networks, such as cellular networks, ZigBee networks, Bluetooth networks and Wi-Fi networks. Another example of a network of devices is an in-vehicle network. Networkable devices may transmit a large amount of data to each other over wired or wireless communication channels. In order to protect the transmitted data, the data are often encrypted. For example, they may be encrypted by performing a cryptographic algorithm which takes a cryptographic key and said data as inputs, or, in other words, the data may be encrypted with the cryptographic key. An example of such a cryptographic algorithm is the so-called Advanced Encryption Standard (AES) algorithm. In case of symmetric-key cryptographic algorithms, the cryptographic key is a secret key which is shared between the source node and the destination node involved in a data transmission. This secret key is often referred to as a master key. It may be desirable to protect this master key when it is distributed to network nodes, e.g., in a destination-node commissioning procedure which precedes the deployment of the master key.

US 2007/0174901 A1 describes a system and method that allow an administrator to set a new password at a wireless access point, such as a traditional WAP or a wireless router. The wireless access point creates a message that includes the new password. The message is encrypted using the old password that was previously set for the wireless network. The encrypted message is wirelessly transmitted from the wireless access point to the active client devices (those clients currently accessing the wireless network). The clients decrypt the message using the old password that was previously provided to the clients. The clients retrieve the new password from the message. The clients construct a new message that is encrypted using the new password. The new message is wirelessly transmitted from the clients to the wireless access device and serves as an acknowledgement.

US 2007/0076886 A1 describes that, when conducting encryption key update, each of the network devices successively causes transition among an initial state in which only data encrypted using an old encryption key used before the update can be transmitted and received, a state in which both data encrypted using the old encryption key and data encrypted using a new encryption key used after the update can be transmitted and received, but operation concerning transmission and reception of data encrypted using the new encryption key is not confirmed, a state in which both data encrypted using the old encryption key and data encrypted using the new encryption key can be transmitted and received, and operation concerning transmission and reception of data encrypted using the new encryption key is already also confirmed, and a final state in which only data encrypted using the new encryption key can be transmitted and received. The encryption key is thus updated.

### SUMMARY

According to a first aspect of the present disclosure, a method for facilitating secure communication in a network is conceived as defined in claim 1.

According to a second aspect of the present disclosure, a method for facilitating secure communication in a network is conceived as defined in claim 2.

In one or more embodiments, the source node is a network gateway.

In one or more embodiments, the current cryptographic key and the new cryptographic key are secret master keys.

In one or more embodiments, the current cryptographic key is an initial cryptographic key, and the method further comprises, before encrypting and transmitting the new cryptographic key: encrypting, by the source node, the initial cryptographic key using a device key as an encryption key, wherein said device key is based on a device identifier that identifies the destination node; transmitting, by the source node, the encrypted initial cryptographic key to the destination node.

In one or more embodiments, the device identifier is a unique serial number of the destination node.

In one or more embodiments, the device key is the same as the device identifier.

In one or more embodiments, the device key comprises the device identifier and one or more padding bits.

In one or more embodiments, the device key comprises the device identifier and at least one copy of the device identifier.

According to a third aspect of the present disclosure, a computer program product is provided, comprising instructions which, when being executed by a processing unit, causes said processing unit to carry out a method of the kind set forth.

According to a fourth aspect of the present disclosure, a source node for facilitating secure communication in a network is provided as defined in claim 11.

According to a fifth aspect of the present disclosure, a destination node for facilitating secure communication in a network is provided as defined in claim 12.

### DESCRIPTION OF DRAWINGS

Embodiments will be described in more detail with reference to the appended drawings, in which:
Fig. 1 shows an example of a network;
Fig. 2 shows an illustrative embodiment of a method for facilitating secure communication;
Fig. 3 shows a further illustrative embodiment of a method for facilitating secure communication;
Fig. 4 shows a further illustrative embodiment of a method for facilitating secure communication;
Fig. 5 shows a further illustrative embodiment of a method for facilitating secure communication;
Fig. 6 shows a further illustrative embodiment of a method for facilitating secure communication;
Fig. 7 shows a further illustrative embodiment of a method for facilitating secure communication;
Fig. 8 shows an illustrative embodiment of a method for generating a device key.

### DESCRIPTION OF EMBODIMENTS

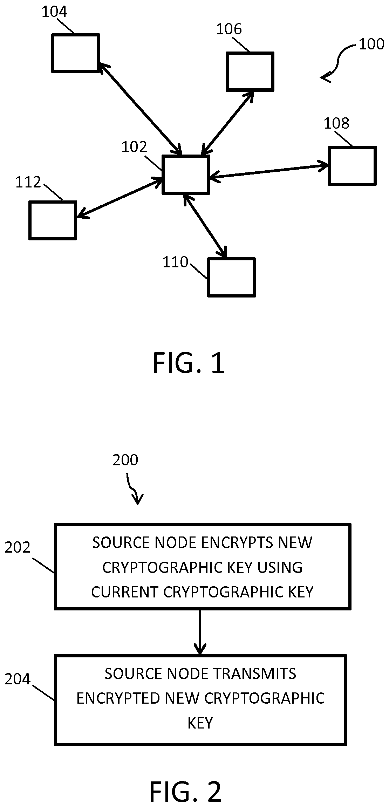

**Fig. 1** shows an example of a network 100. In particular, it shows an example of a network of devices 102, 104, 106, 108, 110, 112. The devices 102, 104, 106, 108, 110, 112 may be connected to each other via wired communication channels (e.g., in Ethernet networks) or wireless communication channels (e.g., in cellular networks, ZigBee networks, Bluetooth networks, Wi-Fi networks). The network comprises a source node 102 and a plurality of destination nodes 104, 106, 108, 110, 112. The source node 102 may communicate data to each destination node 104, 106, 108, 110, 112 via said wired or wireless communication channels. The source node 102 may be a network gateway, for example. In order to protect the data that is communicated between the source node 102 and the destination nodes 104, 106, 108, 110, 112, the data is often encrypted by means of an encryption function that takes said data and a cryptographic key as input parameters. The destination nodes 104, 106, 108, 110, 112 should then decrypt the data by means of a decryption function that takes the received encrypted data and a corresponding cryptographic key as input parameters. For example, the encryption and decryption functions may be based on an AES algorithm, which is a symmetric-key algorithm. In that case, the cryptographic key (input to the encryption function) is the same as the corresponding cryptographic key (input to the decryption function). Before data can be decrypted by a destination node, the cryptographic key should be made available to said destination node. It may be desirable to achieve this in a simple, yet secure manner. Therefore, in accordance with the present disclosure, a method is provided for facilitating secure communication in a network. This may be useful in many kinds of networks, such as Ethernet, ZigBee networks, Bluetooth Wi-Fi, and in-vehicle networks.

**Fig. 2** shows an illustrative embodiment of a method 200 for facilitating secure communication. The method 200 comprises, at 202, encrypting, by a source node in the network, a new cryptographic key using a current cryptographic key as an encryption key. Furthermore, the method 200 comprises, at 204, transmitting, by said source node, the encrypted new cryptographic key to a destination node in the network. In this way, the cryptographic key may be changed periodically, while it may still be provided to the destination node in an easy, yet secure, manner. The current cryptographic key (e.g., denoted by MKᵢ) may be defined as the cryptographic key which is used, at a given moment in time, to encrypt and decrypt data which is transmitted between the source node and the destination node. The new cryptographic key (e.g., denoted by MKᵢ₊₁) may be defined as the cryptographic key which should be used, at a later moment in time, to encrypt and decrypt said data. Thus, the new cryptographic key effectively substitutes the current cryptographic key, and, in accordance with the presently disclosed method, the source node initiates this substitution and enables a secure transmission of the new cryptographic key to the destination node. The current cryptographic key and the new cryptographic key may be secret master keys, for example. In this way, the presently disclosed method may be applied, without undue effort, in networks in which a master key is used for securing data transmissions.

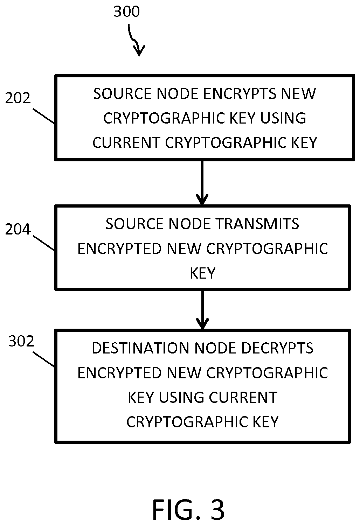

**Fig. 3** shows a further illustrative embodiment of a method 300 for facilitating secure communication. In addition to the steps shown in Fig. 2, the method 300 comprises, at 302, a step wherein the destination node decrypts the encrypted new cryptographic key using the current cryptographic key as a decryption key. This embodiment may enable a particularly efficient implementation in case a symmetric-key algorithm is used for encrypting the new cryptographic key.

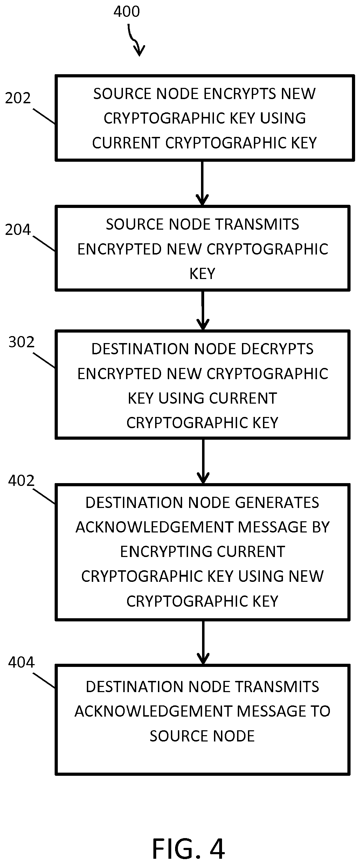

**Fig. 4** shows a further illustrative embodiment of a method 400 for facilitating secure communication. In addition to the steps shown in Fig. 3, the method 400 comprises, at 402 and 404, steps wherein the destination node acknowledges receipt of the encrypted new cryptographic key. Thus, the source node receives a confirmation that the destination node will be able to decrypt data encrypted with the new cryptographic key, and thus the source node may start encrypting data with said new cryptographic key. A relatively efficient acknowledgement process may be realized by generating, at 402, an acknowledgement message by encrypting the current cryptographic key, which is readily available to the destination node, using the new cryptographic key as an encryption key and transmitting, at 404, the acknowledgement message (i.e., the encrypted current cryptographic key) to the source node. The source node may then simply decrypt the received encrypted current cryptographic key using the new cryptographic key (which is readily available to the source node) as a decryption key. If the result of the decryption matches the current cryptographic key used in step 202, then the source node may safely assume that the destination node possesses the correct new cryptographic key. It is noted that, even in case of a temporary communication loss between the source node and the destination node, this acknowledgement process may still enable synchronization of the cryptographic keys used by the source node and the destination node. In particular, it may be arranged that the source node will not use a new cryptographic key for data transmissions until the destination node has acknowledged receipt of said new cryptographic key.

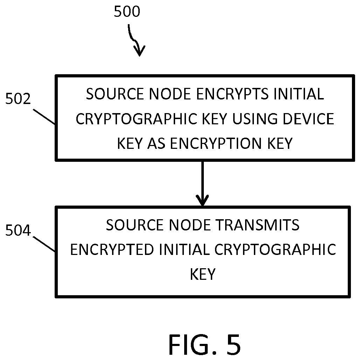

**Fig. 5** shows a further illustrative embodiment of a method 500 for facilitating secure communication. The method 500 comprises, at 502, encrypting, by the source node, an initial cryptographic key using a device key as an encryption key, wherein said device key is based on a device identifier that identifies the destination node. Furthermore, the method comprises, at 504, transmitting, by the source node, the encrypted initial cryptographic key to the destination node. Since the device identifier is already present in, or easily accessible to, the destination node (e.g., it may reside in a memory unit of said node), one of the ingredients required for the decryption process is readily available. A particularly efficient implementation may be realized if the device key is the same as the device identifier. In that case, the destination node may simply use the device identifier as a decryption key for decrypting the encrypted initial cryptographic key. However, even if some computations need to be performed in order to derive the device key from the device identifier, the use of the identifier may still enable a relatively efficient process. The device identifier may for example be the unique serial number of the destination node, in which case the device key may also be regarded as unique, thus offering a high level of security.

The method 500 shown in Fig. 5 may be performed with the purpose to provide an initial secret master key to the destination node, which then effectively becomes the first current cryptographic key used for securing data transmissions. Thus, the method 500 may be carried out before any of the methods 200, 300 and 400 are carried out, for example as part of a destination-node commissioning procedure. After the initial cryptographic key has been used for a certain amount of time (i.e., as the current cryptographic key), the source node may transmit a new cryptographic key to the destination node. If the destination node acknowledges receipt of the new cryptographic key, then this new cryptographic key may be used for encrypting and decrypting data transmitted between the source node and the destination node. That is to say, the new cryptographic key then effectively becomes the current cryptographic key. Subsequently, this process may be repeated. More specifically, the source node may again transmit a new cryptographic key to the destination node, and if the destination node acknowledges receipt of the new cryptographic key, the new cryptographic key may be used for encrypting and decrypting data, thus becoming the current cryptographic key. This process may be repeated as often as required or desired.

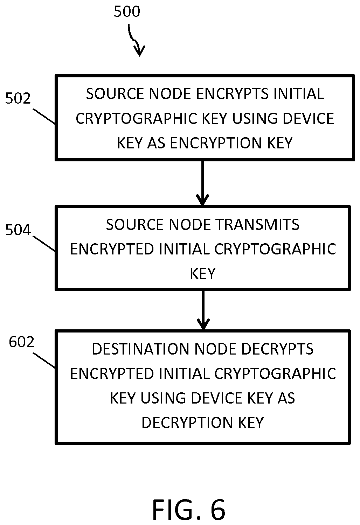

**Fig. 6** shows a further illustrative embodiment of a method 600 for facilitating secure communication. In addition to the steps shown in Fig. 5, the method 600 comprises, at 602, a step wherein the destination node decrypts the encrypted initial cryptographic key using the device key as a decryption key. This embodiment may enable a particularly efficient implementation in case a symmetric-key algorithm is used for encrypting the initial cryptographic key.

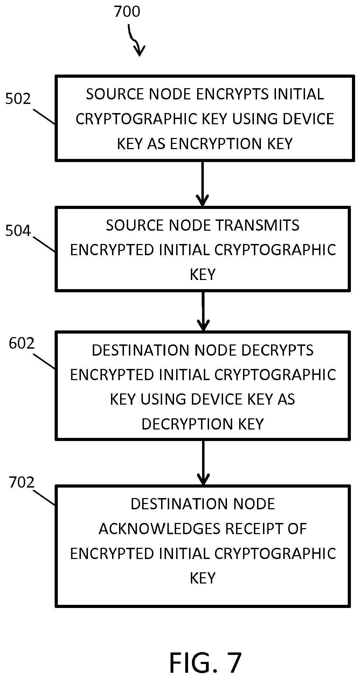

**Fig. 7** shows a further illustrative embodiment of a method 700 for facilitating secure communication. In addition to the steps shown in Fig. 6, the method 700 comprises, at 702, a step wherein the destination node acknowledges receipt of the encrypted initial cryptographic key. Thus, the source node receives a confirmation that the destination node will be able to decrypt data encrypted with the initial cryptographic key, and thus the source node may start encrypting data with said initial cryptographic key. A relatively efficient acknowledgement process may be realized by encrypting the device key, which is readily available to the destination node, using the initial cryptographic key as an encryption key and transmitting the encrypted device key to the source node. The source node may then simply decrypt the received encrypted device key using the initial cryptographic key (which is readily available to the source node) as a decryption key. If the result of the decryption matches the device key used in step 502, then the source node may safely assume that the destination node possesses the correct initial cryptographic key.

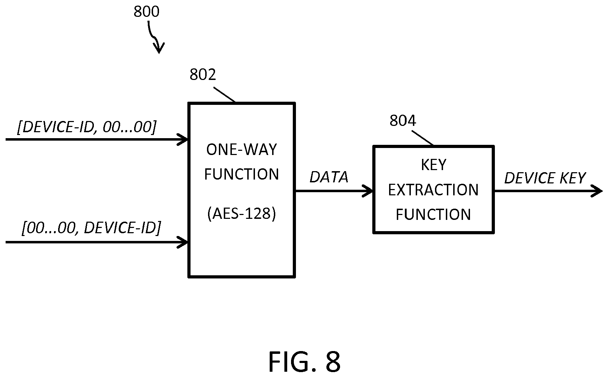

As mentioned above, the device key may be the same as the device identifier, which may result in a particularly efficient implementation. In that case, it may also be relatively easy to provide the device key to the source node. For example, the device key/identifier may be included in a bar code or QR-code attached to the destination node, and the source node may include a reader device which is arranged to read the device key/identifier from said bar code or QR-code. Alternatively, but without limitation, the device key/identifier may be input by an end-user through a user interface of the source node, or the device key/identifier may be read from an NFC tag comprised in or attached to the destination node. The use of an NFC tag may also enable providing a more complex device key to the source node. For example, the destination node may perform some computations on the device identifier and store the resulting device key in its NFC tag. For instance, such computations may be necessary if the device identifier size is smaller than the required encryption/decryption key size. In that case, padding bits may be added to the device identifier in order to increase its length; the resulting device key thus contains the device identifier and one or more padding bits. Alternatively or in addition, the device identifier may be repeated at least once in order to generate the device key. For example, if the device identifier has a length of 32 bits, and the required encryption/decryption key size is 128 bits, the device identifier may be repeated three times; the resulting device key thus contains the device identifier and three copies of the device identifier. In some embodiments, the device key may also contain the device identifier, at least one copy of the device identifier and one or more padding bits. In other embodiments, the device key may be generated by means of more complex procedures which may achieve a high level of security. An example of such a procedure is shown in Fig. 8.

It is noted that, in some embodiments, if the device key is not the same as the device identifier, the computations required for computing the device key may be performed only by the destination node. In that case, the destination node should make the device key available to the source node, for example by storing it in its NFC tag. If the source node is equipped with an NFC reader, it can then simply read the device key from the NFC tag if it is brought in proximity of the destination node. In other embodiments, only the device identifier may be provided to the source node. In those embodiments, if the device key is not the same as the device identifier, the source node may perform the computations required for generating the device key. In that case, however, the destination node should perform the same computations on its device identifier. The details of the computation algorithm should therefore be shared between the source node and the destination node. For example, this may be done in a first phase of a destination-node commissioning procedure. In a subsequent phase, the device key may then be computed both by the source node and the destination node.

**Fig. 8** shows an illustrative embodiment of a method 800 for generating a device key. The method 800 comprises executing a one-way function 802, such as an AES-128 encryption function, that takes two values as input parameters. The first value comprises the device identifier (e.g., a unique serial number) in a most significant bits portion, and a sequence of padding bits (in this case, zeros) in a least significant bits portion. The second value comprises a sequence of padding bits (in this case, zeros) in a most significant bits portion, and the device identifier in a least significant bits portion. The one-way function 802 returns data whose size may not match the required encryption/decryption key size. In that case, a key extraction function 804 may be executed. The key extraction function 804 extracts a device key from the data generated by the one-way function 802.

In some embodiments, the device key may be stored in a memory unit of the source node, such that the source node may authenticate the destination node by means of said device key after an arbitrary amount of time has elapsed. In particular, if the source node (e.g., a network gateway) determines that a destination node, which already forms part of the network, behaves in an unexpected manner, the source node may authenticate the destination node by (i) retrieving the device key from its memory unit and by (ii) sending a message encrypted with said device key to the destination node. If the destination node succeeds in replying to the encrypted message, it may be concluded that it possessed the correct device key, and the source node may safely assume that the destination node is genuine. When the destination node fails to reply, it may be disconnected from the network or other suitable measures may be taken. The encrypted message may be sent several times (i.e., two or more trials), and the destination node may be disconnected only if it fails to reply to each encrypted message, for example.

In Table 1, an example implementation of the above-described is shown, which is based on the AES algorithm. In the Table, transmitted data is denoted by *D,* the encryption function is denoted by *AES,* the decryption function is denoted by *AES⁻¹* (the inverse of the encryption function), the device key is denoted by *AESDK,* the initial cryptographic key is denoted by *MK,* the current cryptographic key is denoted by *MKi,* and the new cryptographic key is denoted by *MK*_{*i*+}*₁.* The AES encryption function has as input parameters a key and data. In Table 1, the notation *AES(key,data)* is used. The decryption function is denoted by *AES-₁(key,data).* As mentioned above, the first current cryptographic key (MK₁) may in fact be the initial cryptographic key (MK). Thereafter, the new cryptographic key (MKᵢ₊₁) becomes the current cryptographic key (MKᵢ₊₁) in the above-described iterative process. Accordingly, in a first iteration, new cryptographic key MK₂ substitutes the first current cryptographic key MK₁, thus becoming the second current cryptographic key. Then, in a second iteration, new cryptographic key MK₃ substitutes the second current cryptographic key MK₂, thus becoming the third current cryptographic key, etc. etc.

**Table 1**

| | Destination node | | Source node |
|---|---|---|---|
| **Network control communication** | | | |
| Initialize MK | Generate and transmit AESDK | Out-of-band message: AESDK → | |
| | | | Receives AESDK (out- of-band) |
| | | ← D | Reply with MK encrypted with AESDK |
| | Receives MK = AES⁻¹(AESDK,D) | | D = AES(AESDK,AESMK) |
| | Acknowledges MK reception | D → | |
| | D = AES(MK, AESDK) | | Receives D and checks for acknowledge AESDK ?= AES⁻¹(MK,D) |

| **Command and data communication** | | | |
|---|---|---|---|
| Use key | | ← D | Transmits data |
| | Receives data = AES⁻¹ (MKi, D) | | D=AES(MKi,data) |
| | Transmits data | D → | |
| | D = AES(MKi,data) | | Receives data = AES⁻¹(MKi,D) |
| | : | | : |
| | : | ← D | : |
| | : | D → | : |
| | | | |
| Introduce new key | | ← D | Transmits new key D = AES (MKi,MKi+1) |
| | Receives new key MKi+1 = AES⁻¹(MKi,D) | | |
| | Acknowledges new key D = AES(MKi+1,MKi) | D → | |
| | | | Receives D and checks for acknowledge MKi ?= AES⁻¹(MKi+1,D) |
| Use new key | | ← D | Transmits data D=AES(MKi+1 ,data) |
| | Receives data = AES⁻¹(MKi+1,D) | | |
| | Transmits data | D → | |
| | D = AES(MKi+1 ,data) | | Receives data = AES⁻¹(MKi+1,D) |

The systems and methods described herein may be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

100 network
102 source node
104 destination node
106 destination node
108 destination node
110 destination node
112 destination node
200 method for facilitating secure communication
202 source node encrypts new cryptographic key using current cryptographic key
204 source node transmits encrypted new cryptographic key to destination node
300 method for facilitating secure communication
302 destination node decrypts encrypted new cryptographic key using current cryptographic key
400 method for facilitating secure communication
402 destination node generates acknowledgement message by encrypting current cryptographic key using new cryptographic key
404 destination node transmits acknowledgement message to source node
500 method for facilitating secure communication
502 source node encrypts initial cryptographic key using device key as encryption key
504 source node transmits encrypted initial cryptographic key
600 method for facilitating secure communication
602 destination node decrypts encrypted initial cryptographic key using device key as decryption key
700 method for facilitating secure communication
702 destination node acknowledges receipt of encrypted initial cryptographic key
800 method for generating a device key
802 one-way function
804 key extraction function

## Claims

1. A method for facilitating secure communication in a network, comprising:
- encrypting (202), by a source node in the network, a new cryptographic key using a current cryptographic key as an encryption key, the current cryptographic key based on a device key, wherein the device key comprises a device identifier that identifies a destination node device and at least one copy of the device identifier,
- transmitting (204), by said source node, the encrypted new cryptographic key to a destination node in the network,
the method further comprises receiving, by the source node, an acknowledgement comprising an encrypted current cryptographic key from the destination node, and decrypting, by the source node, the encrypted current cryptographic key using the new cryptographic key as a decryption key.

2. A method for facilitating secure communication in a network, comprising:
- receiving, by a destination node in the network, an encrypted new cryptographic key from a source node in the network;
- decrypting (302), by said destination node, the encrypted new cryptographic key using a current cryptographic key as a decryption key, the current cryptographic key based on a device key, wherein the device key comprises a device identifier that identifies a destination node device and at least one copy of the device identifier,
the method further comprises acknowledging, by the destination node, receipt of the new cryptographic key by encrypting (402) the current cryptographic key using the new cryptographic key as an encryption key and transmitting (404) the encrypted current cryptographic key to the source node.

3. A method as claimed in any preceding claim, wherein the source node is a network gateway.

4. A method as claimed in any preceding claim, wherein the current cryptographic key and the new cryptographic key are secret master keys.

5. A method as claimed in claim 1, wherein the current cryptographic key is an initial cryptographic key, and wherein the method further comprises, before encrypting and transmitting the new cryptographic key:
- encrypting (502), by the source node, the initial cryptographic key using a device key as an encryption key, wherein said device key is based on a device identifier that identifies the destination node;
- transmitting (504), by the source node, the encrypted initial cryptographic key to the destination node.

6. A method as claimed in claim 5, wherein the device identifier is a unique serial number of the destination node.

7. A method as claimed in claim 5 or 6, wherein the device key is the same as the device identifier.

8. A method as claimed in claim 5 or 6, wherein the device key comprises the device identifier and one or more padding bits.

9. A method as claimed in claim 5, 6 or 8, wherein the device key comprises the device identifier and at least one copy of the device identifier.

10. A computer program product comprising instructions which, when being executed by a processing unit, causes said processing unit to carry out a method as claimed in any preceding claim.

11. A source node for facilitating secure communication in a network, said source node being arranged to:
- encrypt (202) a new cryptographic key using a current cryptographic key as an encryption key, the current cryptographic key based on a device key, wherein the device key comprises a device identifier that identifies a destination node device and at least one copy of the device identifier,
- transmit (204) the encrypted new cryptographic key to a destination node in the network,
the source node is further arranged to receive an acknowledgement comprising an encrypted current cryptographic key from the destination node, and to decrypt the encrypted current cryptographic key using the new cryptographic key as a decryption key.

12. A destination node for facilitating secure communication in a network, said destination node being arranged to:
- receive an encrypted new cryptographic key from a source node in the network;
- decrypt (302) the encrypted new cryptographic key using a current cryptographic key as a decryption key, the current cryptographic key based on a device key, wherein the device key comprises a device identifier that identifies a destination node device and at least one copy of the device identifier,
the destination node is further arranged to acknowledge receipt of the new cryptographic key by encrypting (402) the current cryptographic key using the new cryptographic key as an encryption key and transmitting (404) the encrypted current cryptographic key to the source node.

## Patentansprüche

1. Ein Verfahren zum Ermöglichen von sicherer Kommunikation in einem Netzwerk, aufweisend:
Verschlüsseln (202), mittels eines Quellknotens in einem Netzwerk, eines neuen kryptographischen Schlüssels unter Verwenden eines gegenwärtigen kryptographischen Schlüssels als einen Verschlüsselungsschlüssel,
wobei der gegenwärtige kryptographische Schlüssel auf einem Vorrichtungsschlüssel basiert,
wobei der Vorrichtungsschlüssel aufweist einen Vorrichtungsidentifizierer, welcher identifiziert eine Zielknoten Vorrichtung, und zumindest eine Kopie von dem Vorrichtungsidentifizierer,
Übertragen (204), mittels des Quellknotens, des verschlüsselten neuen kryptographischen Schlüssels zu einem Zielknoten in dem Netzwerk,
das Verfahren ferner aufweisend
Empfangen, mittels des Quellknotens, einer Bestätigung, welche aufweist einen verschlüsselten gegenwärtigen kryptographischen Schlüssel von dem Zielknoten, und
Entschlüsseln, mittels des Quellknotens, des verschlüsselten gegenwärtigen kryptographischen Schlüssels unter Verwenden des neuen kryptographischen Schlüssels als ein Entschlüsselungsschlüssel.

2. Ein Verfahren zum Ermöglichen von sicherer Kommunikation in einem Netzwerk, aufweisend:
Empfangen, mittels eines Zielknotens in dem Netzwerk, eines verschlüsselten neuen kryptographischen Schlüssels von einem Quellknoten in dem Netzwerk;
Entschlüsseln (302), mittels des Zielknotens, des verschlüsselten neuen kryptographischen Schlüssels unter Verwenden eines gegenwärtigen kryptographischen Schlüssels als ein Entschlüsselungsschlüssel,
wobei der gegenwärtige kryptographische Schlüssel auf einem Vorrichtungsschlüssel basiert,
wobei der Vorrichtungsschlüssel aufweist einen Vorrichtungsidentifizierer, welcher identifiziert eine Zielknoten Vorrichtung, und zumindest eine Kopie von dem Vorrichtungsidentifizierer,
das Verfahren ferner aufweisend
Bestätigen, mittels des Zielknotens, von Empfang von dem neuen kryptographischen Schlüssel mittels Verschlüsselns (402) des gegenwärtigen kryptographischen Schlüssels unter Verwenden des neuen kryptographischen Schlüssels als ein Verschlüsselungsschlüssel und mittels Übertragens (404) des verschlüsselten gegenwärtigen kryptographischen Schlüssels zu dem Quellknoten.

3. Ein Verfahren gemäß irgendeinem vorherigen Anspruch,
wobei der Quellknoten ein Netzwerk Gateway ist.

4. Ein Verfahren gemäß irgendeinem vorherigen Anspruch,
wobei der gegenwärtige kryptographische Schlüssel und der neue kryptographische Schlüsse geheime Masterschlüssel sind.

5. Ein Verfahren gemäß Anspruch 1,
wobei der gegenwärtige kryptographische Schlüssel ein initialer kryptographischer Schlüssel ist, und
wobei das Verfahren ferner aufweist, vor Verschlüsseln und Übertragen des neuen kryptographischen Schlüssels:
Verschlüsseln (502), mittels des Quellknotens, des initialen kryptographischen Schlüssels unter Verwenden eines Vorrichtungsschlüssels als ein Verschlüsselungsschlüssel, wobei der Vorrichtungsschlüssel auf einem Vorrichtungsidentifizierer basiert, welcher den Zielknoten identifiziert;
Übertragen (504), mittels des Quellknotens, des verschlüsselten initialen kryptographischen Schlüssels zu dem Zielknoten.

6. Ein Verfahren gemäß Anspruch 5,
wobei der Vorrichtungsidentifizierer eine einzigartige Seriennummer von dem Zielknoten ist.

7. Ein Verfahren gemäß Anspruch 5 oder 6,
wobei der Vorrichtungsschlüssel der gleiche ist wie der Vorrichtungsidentifizierer.

8. Ein Verfahren gemäß Anspruch 5 oder 6,
wobei der Vorrichtungsschlüssel aufweist den Vorrichtungsidentifizierer und einen einzigen oder mehrere Padding Bits.

9. Ein Verfahren gemäß Anspruch 5, 6 oder 8,
wobei der Vorrichtungsschlüssel aufweist den Vorrichtungsidentifizierer und zumindest eine Kopie von dem Vorrichtungsidentifizierer.

10. Ein Computerprogramm Produkt aufweisend
Instruktionen, welche, wenn diese ausgeführt werden mittels einer Verarbeitungseinheit, veranlassen die Verarbeitungseinheit zum Durchführen eines Verfahrens gemäß irgendeinem vorherigen Anspruch.

11. Ein Quellknoten zum Ermöglichen von sicherer Kommunikation in einem Netzwerk, wobei der Quellknoten eingerichtet ist zum:
Verschlüsseln (202) eines neuen kryptographischen Schlüssels unter Verwenden eines gegenwärtigen kryptographischen Schlüssels als ein Verschlüsselungsschlüssel,
wobei der gegenwärtige kryptographische Schlüssel basiert auf einem Vorrichtungsschlüssel, wobei der Vorrichtungsschlüssel aufweist einen Vorrichtungsidentifizierer, welcher identifiziert eine Zielknoten Vorrichtung, und zumindest eine Kopie von dem Vorrichtungsidentifizierer,
Übertragen (204) des verschlüsselten neuen kryptographischen Schlüssels zu einem Zielknoten in dem Netzwerk,
wobei der Quellknoten ferner eingerichtet ist zum Empfangen einer Bestätigung, welche aufweist einen verschlüsselten gegenwärtigen kryptographischen Schlüssel von dem Zielknoten, und zum Entschlüsseln des verschlüsselten gegenwärtigen kryptographischen Schlüssels unter Verwenden des neuen kryptographischen Schlüssels als ein Entschlüsselungsschlüssel.

12. Ein Zielknoten zum Ermöglichen von sicherer Kommunikation in einem Netzwerk, wobei der Zielknoten eingerichtet ist zum:
Empfangen eines verschlüsselten neuen kryptographischen Schlüssels von einem Quellknoten in dem Netzwerk;
Entschlüsseln (302) des verschlüsselten neuen kryptographischen Schlüssels unter Verwenden eines gegenwärtigen kryptographischen Schlüssels als ein Entschlüsselungsschlüssel,
wobei der gegenwärtige kryptographische Schlüssel auf einem Vorrichtungsschlüssel basiert,
wobei der Vorrichtungsschlüssel aufweist einen Vorrichtungsidentifizierer, welcher identifiziert eine Zielknoten Vorrichtung, und zumindest eine Kopie von dem Vorrichtungsidentifizierer,
wobei der Zielknoten ferner eingerichtet ist zum Bestätigen von Empfang von dem neuen kryptographischen Schlüssel mittels Verschlüsseln (402) des gegenwärtigen kryptographischen Schlüssels unter Verwenden des neuen kryptographischen Schlüssels als ein Verschlüsselungsschlüssel und mittels Übertragens (404) des verschlüsselten gegenwärtigen kryptographischen Schlüssels zu dem Quellknoten.

## Revendications

1. Procédé pour faciliter une communication sécurisée dans un réseau, comprenant les étapes suivantes :
- crypter (202), par un nœud source dans le réseau, une nouvelle clé cryptographique en utilisant une clé cryptographique courante comme clé de cryptage, la clé cryptographique courante étant basée sur une clé de dispositif, où la clé de dispositif comprend un identifiant de dispositif qui identifie un dispositif de nœud de destination et au moins une copie de l'identifiant de dispositif,
- transmettre (204), par ledit nœud source, la nouvelle clé cryptographique cryptée à un nœud de destination dans le réseau,
le procédé comprenant en outre de recevoir, par le nœud source, un accusé de réception comprenant une clé cryptographique courante cryptée en provenance du nœud de destination, et de décrypter, par le nœud source, la clé cryptographique courante cryptée en utilisant la nouvelle clé cryptographique comme clé de décryptage.

2. Procédé pour faciliter une communication sécurisée dans un réseau, comprenant les étapes suivantes :
- recevoir, par un nœud de destination du réseau, une nouvelle clé cryptographique cryptée en provenance d'un nœud source du réseau ;
- décrypter (302), par ledit nœud de destination, la nouvelle clé cryptographique cryptée en utilisant une clé cryptographique courante comme clé de décryptage, la clé cryptographique courante étant basée sur une clé de dispositif, où la clé de dispositif comprend un identifiant de dispositif qui identifie un dispositif de nœud de destination et au moins une copie de l'identifiant de dispositif,
le procédé comprenant en outre d'accuser réception, par le nœud de destination, de la nouvelle clé cryptographique en cryptant (402) la clé cryptographique courante en utilisant la nouvelle clé cryptographique comme clé de cryptage, et de transmettre (404) la clé cryptographique courante cryptée au nœud source.

3. Procédé tel que revendiqué dans l'une quelconque des revendications précédentes, dans lequel le nœud source est une passerelle de réseau.

4. Procédé tel que revendiqué dans l'une quelconque des revendications précédentes, dans lequel la clé cryptographique courante et la nouvelle clé cryptographique sont des clés maîtresses secrètes.

5. Procédé selon la revendication 1, dans lequel la clé cryptographique courante est une clé cryptographique initiale, et où le procédé comprend en outre, avant le cryptage et la transmission de la nouvelle clé cryptographique, les étapes suivantes :
- crypter (502), par le nœud source, la clé cryptographique initiale en utilisant une clé de dispositif comme clé de cryptage, où ladite clé de dispositif est basée sur un identifiant de dispositif qui identifie le nœud de destination ;
- transmettre (504), par le nœud source, la clé cryptographique initiale cryptée au nœud de destination.

6. Procédé tel que revendiqué dans la revendication 5, dans lequel l'identifiant de dispositif est un numéro de série unique du nœud de destination.

7. Procédé selon la revendication 5 ou la revendication 6, dans lequel la clé de dispositif est la même que l'identifiant de dispositif.

8. Procédé selon la revendication 5 ou la revendication 6, dans lequel la clé de dispositif comprend l'identifiant de dispositif et un ou plusieurs bits de remplissage.

9. Procédé selon les revendications 5, 6 ou 8, dans lequel la clé de dispositif comprend l'identifiant de dispositif et au moins une copie de l'identifiant de dispositif.

10. Produit programme informatique comprenant des instructions qui, lorsqu'elles sont exécutées par une unité de traitement, amènent ladite unité de traitement à exécuter un procédé tel que revendiqué dans l'une quelconque des revendications précédentes.

11. Nœud source pour faciliter une communication sécurisée dans un réseau, ledit nœud source étant agencé pour :
- crypter (202) une nouvelle clé cryptographique en utilisant une clé cryptographique courante comme clé de cryptage, la clé cryptographique courante étant basée sur une clé de dispositif, où la clé de dispositif comprend un identifiant de dispositif qui identifie un dispositif de nœud de destination et au moins une copie de l'identifiant de dispositif,
- transmettre (204) la nouvelle clé cryptographique cryptée à un nœud de destination dans le réseau,
le nœud source étant en outre agencé pour recevoir un accusé de réception comprenant une clé cryptographique courante cryptée en provenance du nœud de destination, et pour décrypter la clé cryptographique courante cryptée en utilisant la nouvelle clé cryptographique comme clé de décryptage.

12. Nœud de destination pour faciliter une communication sécurisée dans un réseau, ledit nœud de destination étant agencé pour :
- recevoir une nouvelle clé cryptographique cryptée en provenance d'un nœud source du réseau ;
- décrypter (302) la nouvelle clé cryptographique cryptée en utilisant une clé cryptographique courante comme clé de décryptage, la clé cryptographique courante étant basée sur une clé de dispositif, où la clé de dispositif comprend un identifiant de dispositif qui identifie un dispositif de nœud de destination et au moins une copie de l'identifiant de dispositif,
le nœud de destination étant en outre agencé pour accuser réception de la nouvelle clé cryptographique en cryptant (402) la clé cryptographique courante en utilisant la nouvelle clé cryptographique comme clé de cryptage, et pour transmettre (404) la clé cryptographique courante cryptée au nœud source.
